# EUROPEAN PATENT APPLICATION

(11) **EP 0 818 926 A2**
(43) Date of publication of application: **14.01.1998**
(21) Application number: 97304979.4
(22) Date of filing: 08.07.1997
(51) Int. Cl.: H04N 7/14

(54) **Visual telephone and method for changing communication modes**

(30) Priority: 08.07.1996 KR 9627518
(71) Applicant: Samsung Electronics Co., Ltd., Suwon-city, Kyungki-do (KR)
(72) Inventor: Lee, Surg-June, Sucho-ku, Seoul (KR)
(74) Representative: Tunstall, Christopher Stephen

(57) **Abstract**

A visual telephone system comprises means for switching between a visual telephone communication mode in which video and voice signals are transmitted and received via a telephone line and a voice telephone communication mode in which voice signals only are transmitted and received via the telephone line, in response to a tone code signal received via the telephone line during communication and means for switching between the visual telephone communication mode and the voice telephone communication mode and transmitting a corresponding tone code signal via the telephone line during communication in response to a mode change request. A method of changing communication modes between visual telephones is also provided.

## Description

### Background to the Invention

The present invention relates to a visual telephone system, and more particularly a method and an apparatus for changing communication modes during communication between calling and called visual telephones.

There may be a number of normal telephone sets connected to a single telephone network line which has a specific call number.

Even though several visual telephones are connected to such a signal transmission line as a telephone network line, respective telephones are capable of conducting transmission/reception of audio (ie voice) and video (ie visual) information to/from a counterpart visual telephone via the telephone network line if the communication between the calling and called visual telephones is carried out by using a modulation and demodulation technique. However, if the communication of information between the two visual telephones over the telephone network line is achieved by the normal telephone communication technique, only voice communication is possible but not visual communication. This is because a video signal transmitted via the telephone line is a digital signal. In other words, it is because the telephone network line is inappropriate for transmitting a digital signal without modulation, as is well known. Thus, for simultaneous transmission and reception of audio and video signals via a telephone network line between a calling visual telephone and a called telephone, each visual telephone must include a modem device for modulating and demodulating the audio and video signals.

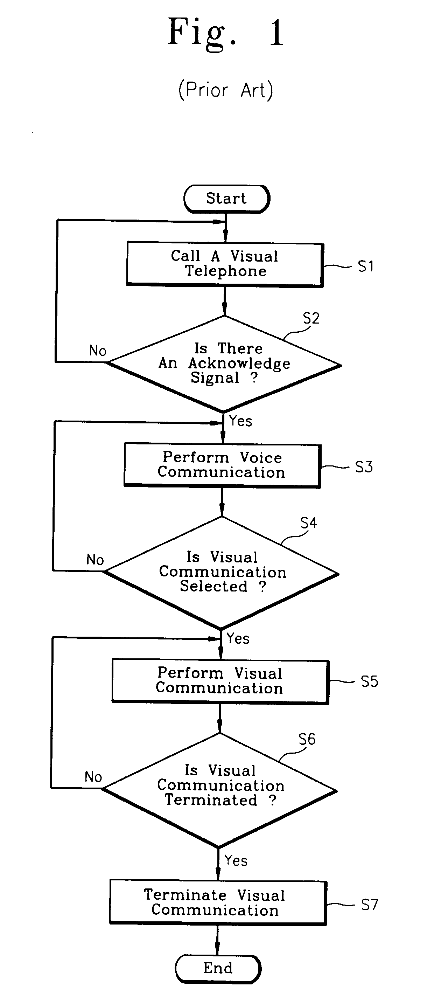

Fig. 1 is a flowchart illustrating a conventional method of performing visual communication via a telephone network line between calling and called visual telephones, each of which has a modem device. As shown in the drawing, the conventional method comprises the steps of calling the called visual telephone via the telephone network line, in response to key inputting of the call number of the telephone (step S1), determining whether or not an acknowledge signal is generated from the called visual telephone (step S2), performing, if so, voice communication with the called telephone (step S3), determining whether or not visual communication is selected according to the consultation with the counterpart (step S4), performing, if so, visual communication with the called one (step S5), determining whether or not there is a termination request from either the calling or called ones (step S6), and terminating, if so, the visual communication of the calling visual telephone with the called visual telephone (step S7).

In the conventional method as stated immediately above, visual communication can be performed by simultaneously selecting visual communication mode at both visual telephones during voice communication. If any one of the both visual telephones is not set to the visual communication mode, visual communication cannot be performed between them. Thus, to perform the visual communication between the visual telephones, all of the visual telephones must be set to the visual communication mode.

Also, it is impossible to change a visual communication mode to a voice communication mode during communication, and vice versa.

### Summary of the Invention

According to the invention there is provided a visual telephone system comprising:
means for switching between a visual telephone communication mode in which video and voice signals are transmitted and received via a telephone line and a voice telephone communication mode in which voice signals only are transmitted and received via the telephone line, in response to a tone code signal received via the telephone line during communication; and
means for switching between the visual telephone communication mode and the voice telephone communication mode and transmitting a corresponding tone code signal via the telephone line during communication in response to a mode change request.

Preferably, the means for switching between communication modes in response to a tone code signal received via a telephone line comprises means for generating a mode control signal corresponding to the received tone code signal and control means responsive to the mode control signal for controlling switching between communication modes.

Preferably, the means for switching between communication modes in response to a received tone code signal comprises a tone code decoder for decoding a tone code signal from the telephone line and for producing a mode control signal corresponding to the received tone code signal.

Preferably, the tone code decoder comprises an analogue to digital converter converting an analogue tone code signal into a digital tone code signal and a decoder for decoding the digital tone code signal to generate the mode control signal.

Preferably, the tone code decoder comprises a memory for storing data associated with the decoding of the tone code signal.

Preferably, the means for switching between communication modes and transmitting a tone code signal comprises means for generating a mode control signal in response to a mode change request and means for generating a corresponding tone control signal from the mode control signal.

Preferably, the means for switching communication modes and transmitting the corresponding tone code signal comprises a tone code encoder for encoding the mode control signal to produce a corresponding tone code signal.

Preferably, the tone code encoder comprises an encoder for encoding the mode control signal to generate a digital tone code signal and a digital to analogue converter for converting the digital tone code into an analogue tone code signal.

Preferably, the tone code encoder comprises a memory for storing data associated with the encoding of the tone code signal, for example, a plurality of tone codes.

The present invention provides a visual telephone system and a method for changing a communication mode to other communication modes during communication.

Preferably, the system comprises a modem for transmitting and receiving video and voice signals so as to perform a visual communication via a telephone network line connected to it. Preferably, the system comprises a control unit for performing a control routine to a mode control signal MCS and enabling the modem to be set the visual communication mode or the voice communication mode. Preferably, the system comprises a telephone hand set for voice communication via the telephone network line connected to it. Preferably, the system comprises a switch for connecting the telephone network line to either the modem or the telephone hand set by means of control of the control unit. Preferably, there is a tone code codec unit connected between the control unit and the telephone network line, for decoding a tone code signal from the telephone network line to produce the mode control signal and encoding the mode control signal from the control unit to generate a tone code indicative of setting and changing the communication modes during communication of the visual telephone.

In a preferred embodiment, the tone code codec unit comprises a tone code decoder for decoding the tone code signal from the telephone network line and a tone code encoder for encoding the mode control signal from the control unit. The tone code decoder may comprise an analog-to-digital converter for converting an analog tone code signal into a digital tone code signal. Preferably, it comprises a decoder for decoding the digital tone code signal to generate the mode control signal. Preferably, it comprises a memory for storing data associated with the decoding of the tone code signal. The tone code encoder may comprise a memory for storing data associated with the encoding of the tone code signal. Preferably, it comprises an encoder for encoding the mode control signal to generate the digital tone code. Preferably, it comprises a digital-to-analog converter for converting the digital tone code into an analog tone code signal.

In a further aspect of the invention, there is provided a method of controlling a visual telephone system comprising two visual telephones, each of which has a visual telephone communication mode in which video and voice signals are transmitted and received via a telephone line and a voice telephone communication mode in which voice signals only are transmitted and received via the telephone line, comprising:
detecting a mode change request in a first visual telephone during communication;
in response to the mode change request, switching the first visual telephone between the visual telephone communication mode and the voice telephone communication mode and transmitting from the first visual telephone a tone code signal via the telephone line;
receiving the tone code signal in the second visual telephone; and
switching the second visual telephone between the visual telephone communication mode and the voice telephone communication mode in response to the tone code signal.

Preferably, the mode change request is generated in the first visual telephone.

Preferably, there is provided a method of controlling a visual telephone system comprising two visual telephones comprising the step of transmitting from the second visual telephone a communication mode connection response tone code signal; and
receiving the communication mode connection response tone signal in the first visual telephone.

Preferably, there is provided a method of controlling a visual telephone system, in which switching the first visual telephone between communication modes takes place in response to the received communication mode response tone code signal from the second visual telephone.

Preferably, there is provided a method of controlling a visual telephone system comprising two visual telephones comprising the step of transmitting a communication mode connection acknowledge tone code signal from the first visual telephone via the telephone line.

The mode change request may be generated in the second visual telephone.

The first visual telephone may be the calling telephone and the second visual telephone may be the called telephone, or vice versa.

Preferably, the method comprises the step of approving the communication mode to be established prior to switching between the communication modes in the first and/or the second visual telephone.

Preferably, there is provided a method for changing communication modes during communication between calling and called visual telephone systems, comprising the steps of: optionally, selecting a communication function in accordance with a function key entry; determining whether the calling visual telephone is in a calling state; calling, if in the calling stage, the called visual telephone so as to connect the calling visual telephone with the called visual telephone, optionally, setting, if not, the calling visual telephone to be in a stand-by state so as to await a call; connecting the calling and called visual telephones with each other when the call occurs; performing voice or visual communication between the calling and called visual telephones in accordance with a selected communication function; determining whether there is generated a mode changing request from either the calling or the called visual telephone during the communication therebetween; changing, if so, a performing communication mode to the other communication mode so as to perform the communication in accordance with the communication mode so changed; and, optionally, terminating, if not, the communication between the calling and called visual telephones.

### Brief Description of the Drawings

Preferred embodiments of the invention will now be described by way of example only with reference to the following drawings.

Fig. 1 is a flowchart illustrating a conventional method of performing visual communication via a telephone network line between calling and called visual telephone systems.

Fig. 2 is a block diagram of a visual telephone system according to an embodiment of the present invention.

Fig. 3 is a detailed circuit diagram of the tone code coding/decoding unit shown in Fig. 2.

Fig. 4 is a diagram showing a number of buffers which are allotted within the RAM shown in Fig.2.

Fig. 5 is a diagram showing a number of keys which are arranged on the key input unit shown in Fig. 2.

Fig. 6 is a flowchart illustrating a method for changing communication modes during communication in accordance with another embodiment of the present invention.

Fig. 7A through Fig. 7C are flowcharts illustrating the detailed method for changing communication modes during communication in the visual telephone shown in Fig. 2.

Fig. 8A through Fig. 8C are flowcharts illustrating the detailed visual communication processing routine.

Fig. 9A through Fig. 9C are flowcharts illustrating the detailed voice communication processing routine.

### Detailed Description of Preferred Embodiments

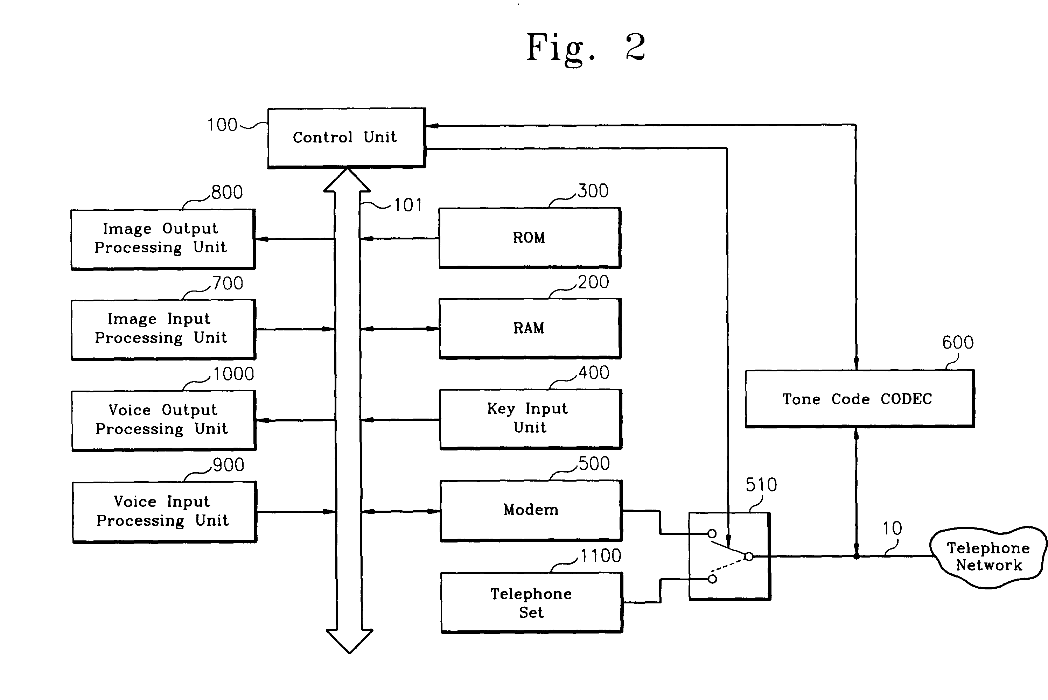

Referring to Fig. 2, a visual telephone system of the present invention includes a control unit 100 for performing a control routine in response to a mode control signal MCS. A tone code CODEC (coder & decoder) unit 600 is provided for generating a tone code indicative of mode setting and changing in response to the mode control signal MCS from the control unit 100 to transmit it through the telephone network line 10 to a counterpart and decoding a tone code signal supplied from the counterpart through the telephone network line 10 to produce the mode control signal MCS. A switch 510 is provided for connecting a telephone network to either a modem 500 or a telephone set 1100 by means of the control of the control unit 100. The control unit 100 is also provided to control the whole operation of the visual telephone system. Thus, the visual telephone system is capable of selecting the connection/disconnection of visual communication with the visual telephone depending upon whether there is a visual communication request from a visual telephone of either a calling or called party and the other party approves of it or not. The visual telephone system is also capable of easily changing communication modes during communicationl. For instance, when the calling and the called parties are in voice communication with each other by means of their visual telephones, the voice communication mode can be changed to a visual communication mode in accordance with a key entry of either the calling or the called visual telephone, or vice versa, during communication. Thus, the visual telephone of the present invention can switch between voice and visual communication during communication.

Referring to Fig. 2, the visual telephone system further comprises an image output processing unit 800 (eg a monitor), an image input processing unit 700 (eg a CCD camera) a voice output processing unit 1000 (eg a sound card), a voice input processing unit 900 (eg a microphone), a key input unit 400 (eg a key matrix) and a memory unit. This memory unit comprises RAM (random access memory) 200 and ROM (read only memory) 300. The control unit 100 executes control programs stored in the ROM 300 so as to control the whole operation of the visual telephone system.

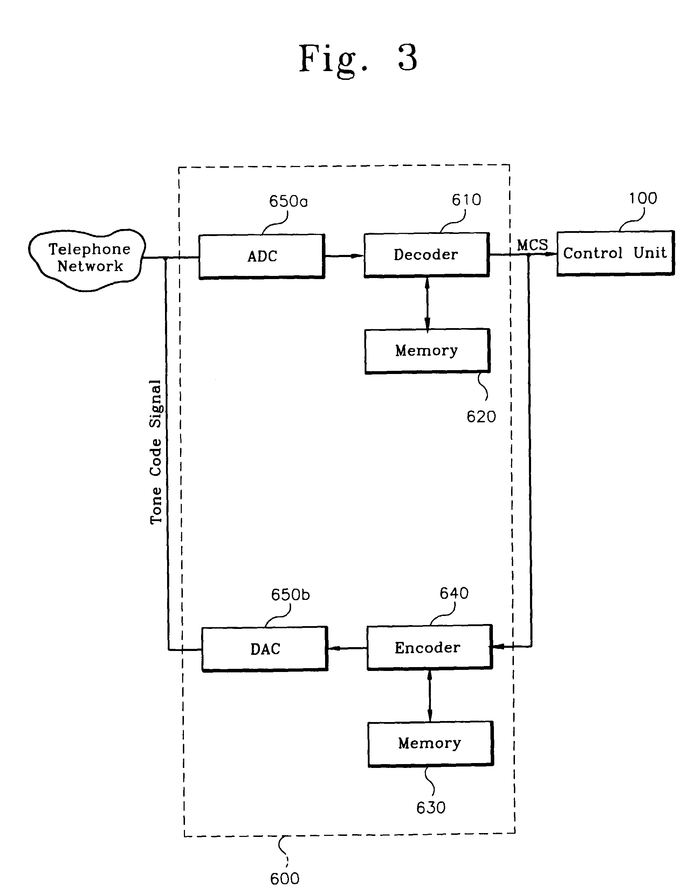

The tone code CODEC unit 600 is connected between the control unit 100 and the telephone network line 10. The CODEC unit 600 decodes a tone code from the telephone network line 10 so as to generate a mode control signal and encodes a tone code so as to generate a tone code signal in response to a mode control signal from control unit 100. The CODEC unit 600 comprises two main sections, a tone code decoder and a tone code encoder. The tone code decoder has, as shown in Fig. 3, an analog-to-digital converter (ADC) 650a for converting an analog tone code signal into a digital tone code signal, a decoder 610 for decoding the digital tone code signal to generate a decoded tone code as a mode control signal MCS, and a memory 620 for storing data in relation with the decoding of the tone code. The tone code encoder has, as also shown in Fig. 3, a memory 630 for storing data associated with the encoding of the tone code, an encoder 640 for encoding the mode control signal to generate a digital tone code, and a digital-to-analog converter (DAC) 650b for converting the digital tone code into an analog tone code signal.

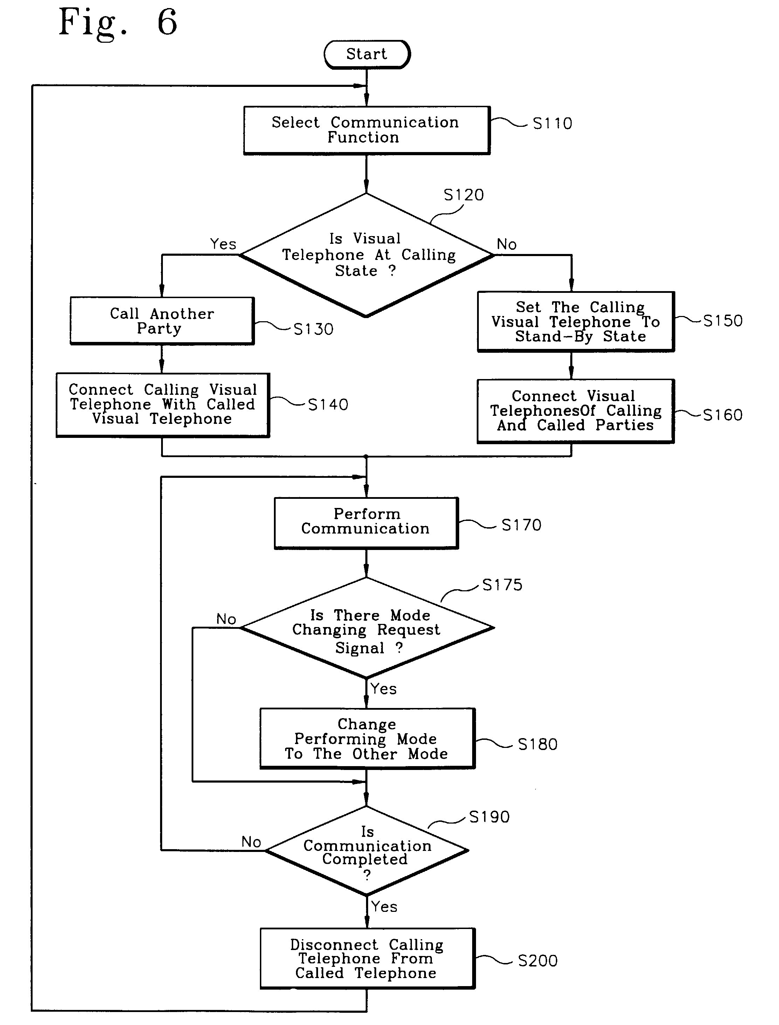

Now, a method for changing a communication mode to another communication mode during communication between calling and called visual telephones will be described with reference Fig. 6. A control program for performing the method, which is stored in the ROM 300 of the visual telephone system shown in Fig. 2, is executed by means of the control unit 100. The visual telephone system of Fig. 2 is capable of changing a communication mode to the other communication modes during communication.

First, at step S110, a calling party selects a communication function by means of a key input unit of the visual telephone. The communication functions available to be selected include approval of visual communication and selection of communication modes. Control then proceeds to step S120, where it is determined whether the visual telephone, ie. the calling visual telephone is in a calling state or a stand-by state. If in the calling state, control proceeds to step S130. Here the calling party calls another party, ie. a called party by dialling, and at step S140 the calling visual telephone connects with the called visual telephone.

At step S120, if the calling visual telephone is not in the calling mode, control proceeds to step S150. The calling visual telephone is then set to the stand-by state so as to await a call from another party. Control proceeds to step S160, when a call is generated from another party, the called visual telephone is physically connected with the counterpart.

At step S170, voice or visual communication may be performed between the calling and called visual telephones. If the calling visual telephone is set to a voice communication mode at step S110, voice communication is performed. If the calling visual telephone is set to a visual communication mode, visual communication is performed.

At step S175, it is determined whether or not there is a mode changing request from the calling or the called visual telephone during communication. If the mode changing request signal is generated, the control proceeds to step S180 in which a communication mode being performed between the calling and called visual telephones is changed to the other communication mode. If the mode changing request signal is not generated, the control proceeds to step S190 in which it is determined whether or not the communication is completed. If the communication is completed, the control proceeds to step S200 in which the calling visual telephone is disconnected from the called visual telephone, and, if not, the control proceeds to step S170 so as to continue to perform the communication.

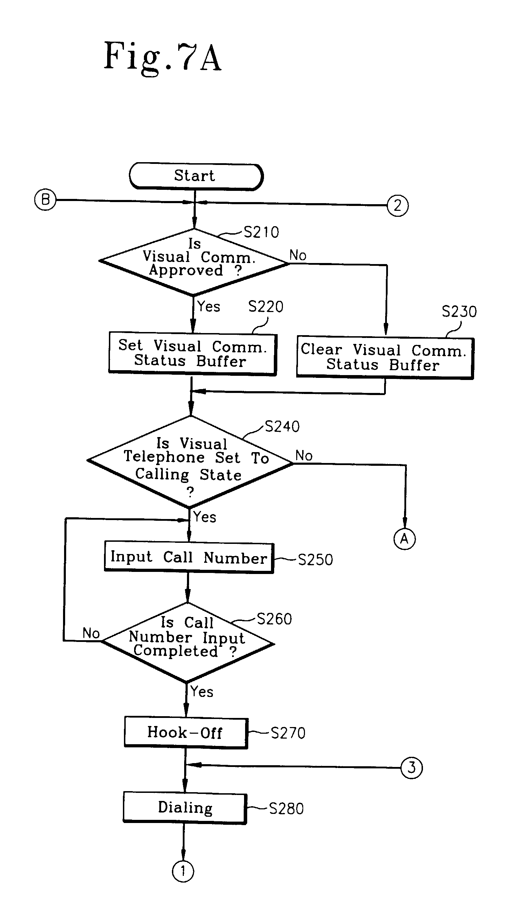

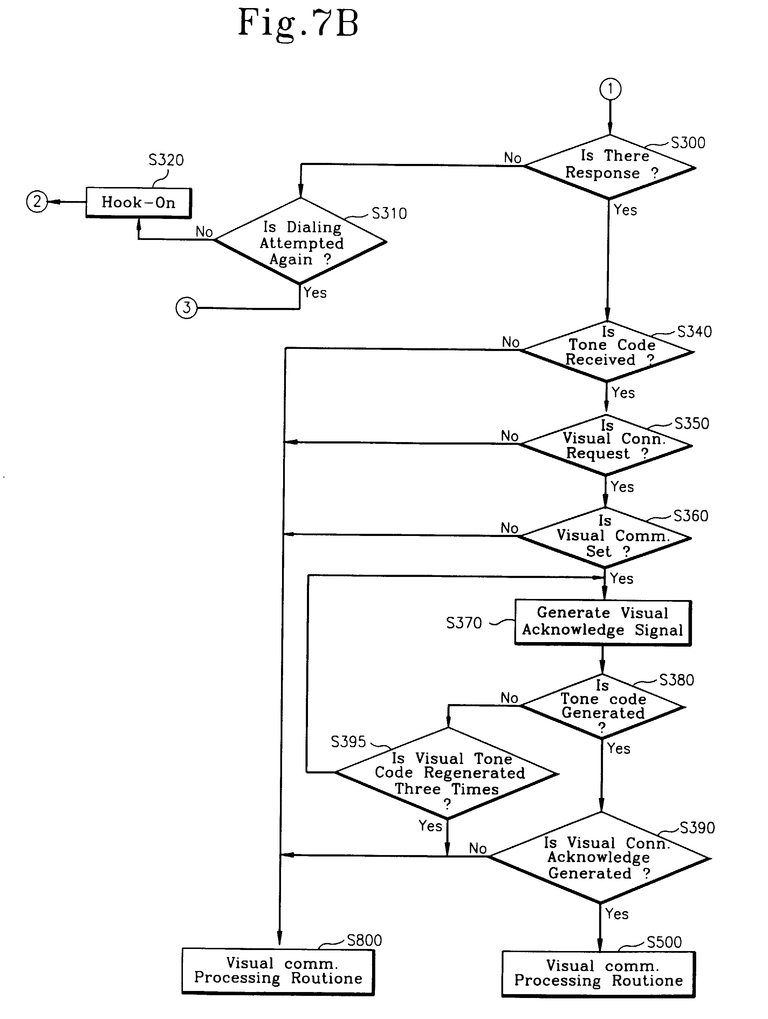

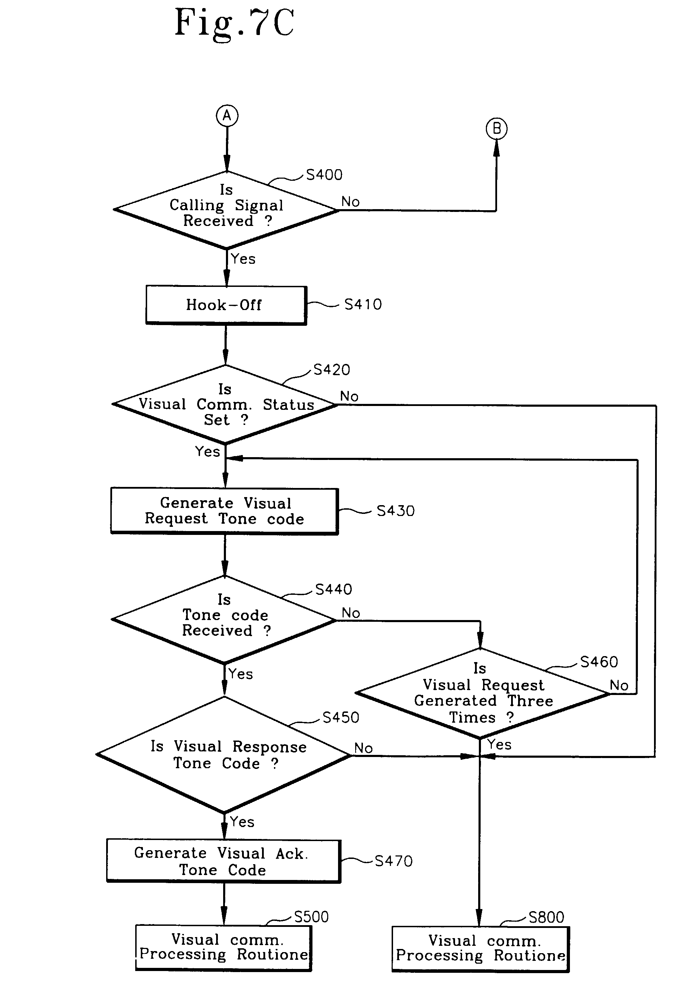

The mode changing method will be described in greater detail with reference to Figs. 7 through 9.

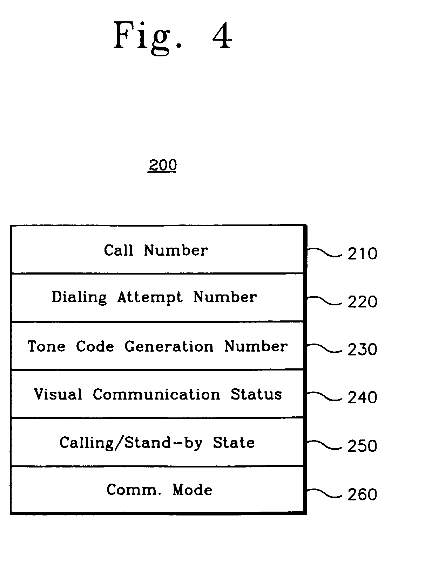

Referring to Fig. 7A, in step S210, it is determined whether visual communication is approved. If so, the control proceeds to step S220 in which the visual communication status buffer 240 (see Fig. 4) is set to store a visual approval signal, ie. a visual flag. If not, the control proceeds to step S230 in which the buffer 240 is cleared.

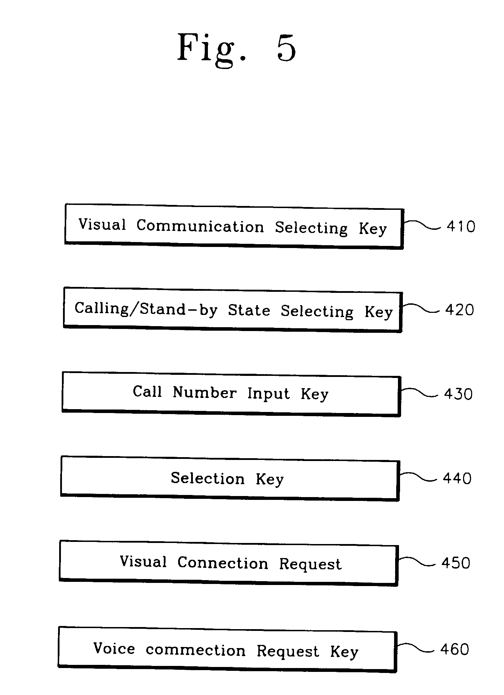

In step S240, it is determined whether the calling visual telephone is set to a calling state or a stand-by state. If in a calling state, the control proceeds to step S250 in which the visual telephone starts to receive a call number through its call number input key 430 (see Fig. 5). In step S260, it is determined whether the call number is completely input. If so, the calling visual telephone is controlled to be in a hook-off state (step S270) and then dialled.

At step S300 of Fig. 7B, it is determined whether there is a response signal from a called visual telephone. If not, the control proceeds to step S310 in which the re-dialling is attempted, for instance, three times. If the re-dialling is completed by checking the number of dialling attempts stored in buffer 220 (see Fig. 4), the control proceeds to step S320 in which the calling visual telephone is placed on-hook.

If a response signal is received from the called visual telephone pursuant to step S300, the control proceeds to step S340 in which it is determined whether a tone code is received from the called visual telephone. If the tone code is not received, the control proceeds to step S800 in which a voice communication processing routine is performed. If the tone code is received, the control proceeds to step S350 in which the tone code from the called visual telephone is detected as a visual connection request signal by means of the control unit 100 of the calling visual telephone. Then, it is checked whether visual communication is set by checking the visual communication status buffer 240 pursuant to step S360. If so, the calling visual telephone generates a visual acknowledge signal through the tone code codec unit 600 (step S370).

In step S380, it is determined whether a tone code signal is generated from the called visual telephone. If so, the control proceeds to step S390 in which the tone code is a visual connection acknowledge signal, and if not, the control proceeds to step S395 in which the visual acknowledge signal is re-generated, for instance, three times.

In step S390, if the calling visual telephone receives the tone code from the called visual telephone as the visual connection acknowledge signal, the control proceeds to step S500 in which a visual communication processing routine is performed.

On the other hand in steps S350, S360 or S390, if not, the control proceeds to step S800 in which voice communication processing route is performed.

In step S400 of Fig 7C, the visual telephone determines whether a calling signal is received from another visual telephone during a stand by state. Then, the visual telephone which receives the called signal serves as a called visual telephone. If a user lifts a hand set of the visual telephone during receipt of the calling signal, the visual telephone is controlled to be in a hook-off state (S410). Then, it is determined in step S420 whether the called visual telephone is in a visual communication status. If so, the called visual telephone generates a visual connection request tone code through its tone code codec unit pursuant to step S430 and provides the request tone code to the calling visual telephone via the telephone network line.

In step S440, the called visual telephone checks whether a tone code is generated from the calling visual telephone. If so, it is determined in step S450 whether the tone code from the calling visual telephone is a visual response tone code. When receiving the visual response tone code from the calling visual telephone, the called visual telephone generates a visual acknowledge tone code pursuant to step S470 and provides it to the calling visual telephone. After this time, a visual communication processing routine is performed between the calling and called visual telephones pursuant to step S500.

On the other hand, at step S440, if a tone code is not generated from the calling visual telephone, the control proceeds to step S460 in which the visual connection request signal is re-generated from the called visual telephone up to a predetermined number of times, eg three times. If so, the control proceeds to step S800 in which a voice communication processing route is performed.

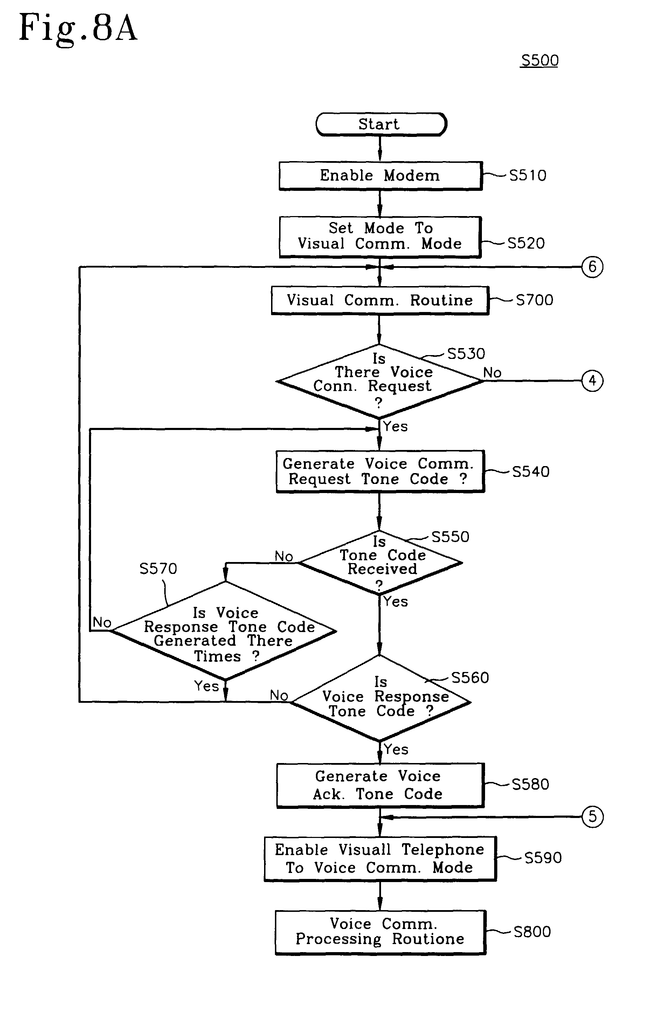

Now, the visual communication processing routine (S500) will be described in greater detail with reference to Figs 8A through 8C.

Referring to Fig. 8A, in steps S510 and S520 the modem 500 is enabled to visual communication mode by the control of the control unit 100 and then the visual telephone is set to visual communication mode. After this, a visual communication routine is performed pursuant to step S700.

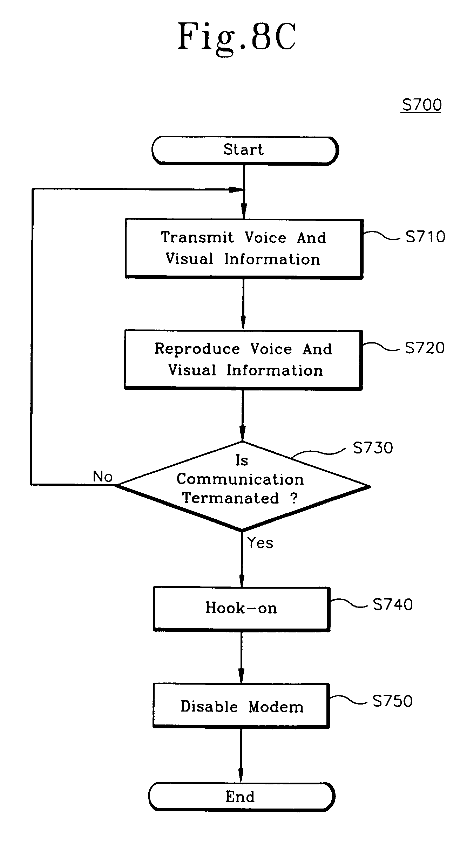

At step S710 of Fig 8C. voice and visual information can be transmitted over the telephone network line between the calling and called visual telephones. The control proceeds to step S720, the visual telephone side which receives the information reproduces the image and voice signals and provides the reproduced signals to the image input processing unit 700 as well as to the voice output processing unit 1000. If the visual communication is terminated at step S730, the control proceeds to step S740 in which the visual telephone is placed in an on-hook state. Also, modem 500 is disabled and placed in a non-operational mode.

On the other hand, when the visual communication routine is terminated during step S700, the control proceeds to step S530 in which it is checked whether there is generated a voice connection request by a user. If so, in step S540, the visual telephone generates a voice connection request tone code and provides it to another visual telephone through the telephone network line.

In step S550, it is determined whether a tone code is received from another visual telephone. If so, the control proceeds to step S560 in which it is checked whether the received tone code is identical with a voice connection response tone code, and if not, the control unit proceeds to step S570 in which it is checked whether a voice connection response tone code is re-generated, for instance, three times.

During step S560, if the received tone code is a voice connection response tone code, the control proceeds to step S580 in which a voice connection acknowledge tone code is generated. At this time, the modem is disabled to the voice communication mode pursuant to step S590.

The control proceeds to step S800 in which the voice communication processing routine is performed.

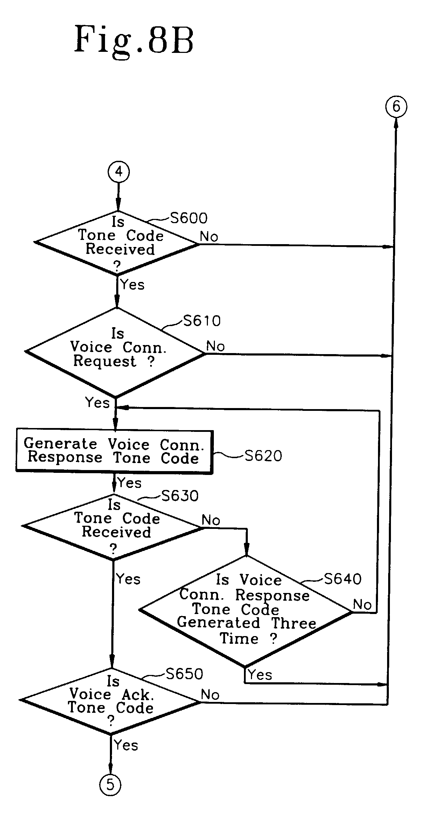

Turning to step S530, if there is generated no voice connection request by a user, the control proceeds to step S600 of Fig.8B to determine whether a tone code is received from another visual telephone. If so, the control proceeds to step S610 in which it is determined whether the received tone code is identical with a voice connection request tone code.

At step S620 of Fig.8B, the visual telephone generates a voice connection response tone code and provides it to another visual telephone, and the control proceeds to step S630. Here, it is determined whether a tone code is received from another visual telephone. If so, the control proceeds to step S650 in which it is checked whether the received tone code is identical with a voice connection acknowledge tone code, and if not, the control unit proceeds to step S640 in which it is checked whether the voice connection response tone code is re-generated, for instance, three times.

During step S650, if the received tone code is a voice connection response tone code, the control jumps to step S590 of Fig.8A so as to disable the modem to voice communication mode. And, during the S640, if the voice connection response tone code is re-generated three times, the control jumps to step S700 of Fig.8A so as to perform the voice communication routine.

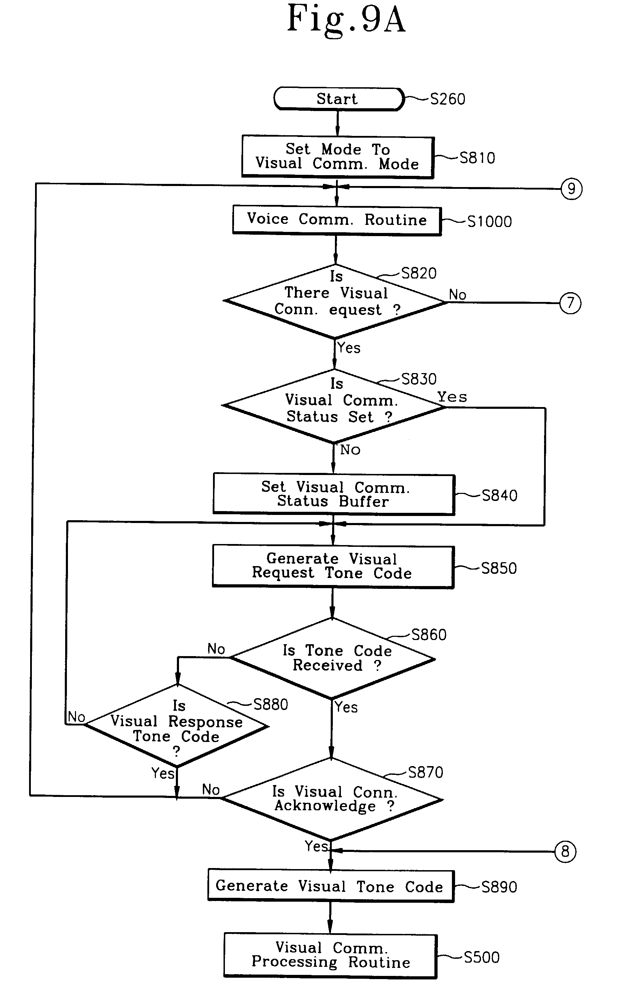

Now, the voice communication processing routine (S800) will be described in greater detail with reference to Figs. 9A through 9C.

In step S810 of Fig.9A, the visual telephone is set to voice communication mode. After this time, a voice communication routine is performed pursuant to step S1000.

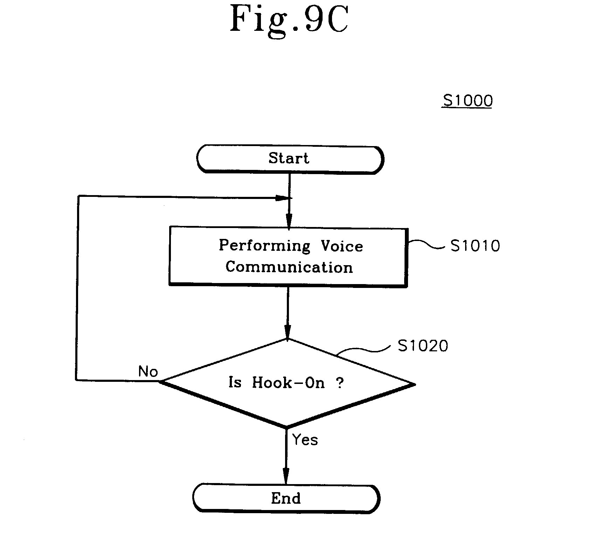

At step S1010 of Fig.9C, only voice information can be transmitted the telephone network line between the calling and called visual telephones in accordance with the voice communication mode. The control proceeds to step S1020, in which it is determined whether a hook switch is in a hook-on state. If so, the voice communication routine is terminated, and if not, the control jumps to step S1010 so as to continue to perform the voice communication.

On the other hand, when the voice communication routine is terminated during step S1000, the control proceeds to step S820 in which it is whether there is generated a visual connection request by a user. If so, it is checked at step S830 whether the visual communication status is set so as to approve visual communication. Here, if the visual communication status is not set, the visual telephone makes the status be set pursuant to S840.

In step S850 of Fig.9A, the visual telephone generates a visual connection request tone code and provides it to another visual telephone through the telephone network line, and the control proceeds to step S860. Here, it is determined whether a tone code is received from another visual telephone. If so, the control proceeds to step S870 in which it is checked whether the received tone code is identical with a visual connection response tone code, and if not, the control unit proceeds to step S880 in which it is checked whether a visual connection response tone code is re-generated, for instance, three times.

During step S870, if the received tone code is a visual connection response tone code, the control proceeds to step S890 in which a visual connection acknowledge tone code is generated. After this, the visual communication processing routine (S500) is performed.

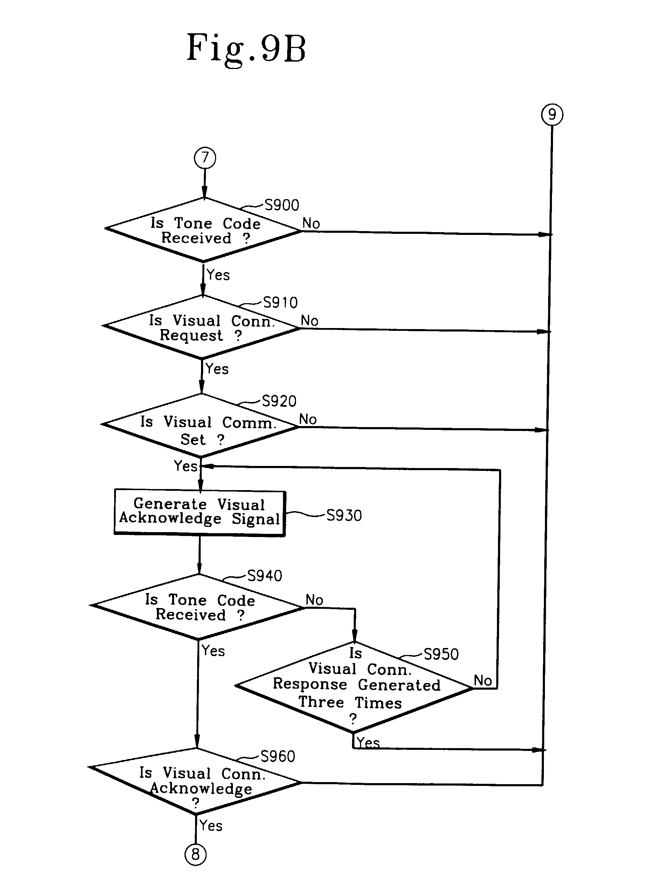

Turning to step S820 of Fig. 9A, if there is no visual connection request generated by a user, the control proceeds to step S900 of Fig. 9B to determine whether a tone code is received from another visual telephone. If so, the control proceeds to step S910 in which it is checked whether the received tone code is identical with a visual connection request tone code. The control proceeds to step S920 in which it is checked whether the visual communication status is set so as to approve visual communication. Here, if the visual communication status is not set, the control jumps to step S1000 so as to perform the voice communication routine.

In step S930 of Fig. 9B, the visual telephone generates a visual connection response tone code and provides it to the other visual telephone, and the control proceeds to step S940. Here, the it is determined whether a tone code is received from the other visual telephone. If so, the control proceeds to step S960 in which it is checked whether the received tone code is identical with a visual connection knowledge tone code, and if not, the control unit proceeds to step S950 in which it is checked whether the visual connection response tone code is re-generated, for instance, three times.

During step S960, if it is determined that the received tone code is a visual connection response tone code the control jumps to step S890 of Fig. 9A, and if not, the control jumps to step S1000 so as to perform the voice communication routine.

Also, during step S950, if the visual connection response tone code is re-generated three times, the control jumps to step S1000 of Fig. 8A, and if not, the control jumps to step S930 so as to generate the visual connection response tone code.

As described above, in the visual telephone system of the present invention, while a voice communication mode is performed between visual telephones of the calling and the called parties, it can be changed to a visual communication mode in accordance with a key entry of either the calling or the called visual telephone, and/or vice versa, during communication between the visual telephones. Therefore, the visual telephone of the present invention can switch between voice and visual communication during communication of voice or visual information.

## Claims

1. A visual telephone system comprising:
means for switching between a visual telephone communication mode in which video and voice signals are transmitted and received via a telephone line and a voice telephone communication mode in which voice signals only are transmitted and received via the telephone line, in response to a tone code signal received via the telephone line during communication; and
means for switching between the visual telephone communication mode and the voice telephone communication mode and transmitting a corresponding tone code signal via the telephone line during communication in response to a mode change request.

2. A visual telephone system according to claim 1, in which the means for switching between communication modes in response to a tone code signal received via a telephone line comprises means for generating a mode control signal corresponding to the received tone code signal and control means responsive to the mode control signal for controlling switching between communication modes.

3. A visual telephone system according to claim 2, in which the means for switching between communication modes in response to a received tone code signal comprises a tone code decoder for decoding a tone code signal from the telephone line and for producing a mode control signal corresponding to the received tone code signal.

4. A visual telephone system according to claim 3, in which the tone code decoder comprises an analogue to digital converter converting an analogue tone code signal into a digital tone code signal and a decoder for decoding the digital tone code signal to generate the mode control signal.

5. A visual telephone system according to claim 3 or 4, in which the tone code decoder comprises a memory for storing data associated with the decoding of the tone code signal.

6. A visual telephone system according to any of claims 1 to 5, in which the means for switching between communication modes and transmitting a tone code signal comprises means for generating a mode control signal in response to a mode change request and means for generating a corresponding tone control signal from the mode control signal.

7. A visual telephone system according to claim 6, in which means for switching communication modes and transmitting the corresponding tone code signal comprises a tone code encoder for encoding the mode control signal to produce a corresponding tone code signal.

8. A visual telephone system according to claim 7 in which the tone code encoder comprises an encoder for encoding the mode control signal to generate a digital tone code signal and a digital to analogue converter for converting the digital tone code into an analogue tone code signal.

9. A visual telephone system according to claim 8, in which the tone code encoder comprises a memory for storing data associated with the encoding of the tone code signal, for example, a plurality of tone codes.

10. A method of controlling a visual telephone system comprising two visual telephones, each of which has a visual telephone communication mode in which video and voice signals are transmitted and received via a telephone line and a voice telephone communication mode in which voice signals only are transmitted and received via the telephone line, comprising:
detecting a mode change request in a first visual telephone during communication;
in response to the mode change request, switching the first visual telephone between the visual telephone communication mode and the voice telephone communication mode and transmitting from the first visual telephone a tone code signal via the telephone line;
receiving the tone code signal in the second visual telephone; and
switching the second visual telephone between the visual telephone communication mode and the voice telephone communication mode in response to the tone code signal.

11. A method of controlling a visual telephone system comprising two visual telephones according to claim 10, in which the mode change request is generated in the first visual telephone.

12. A method of controlling a visual telephone system comprising two visual telephones according to claim 10 or 11 comprising the step of transmitting from the second visual telephone a communication mode connection response tone code signal; and
receiving the communication mode connection response tone signal in the first visual telephone.

13. A method of controlling a visual telephone system according to claim 12, in which switching the first visual telephone between communication modes takes place in response to the received communication mode response tone code signal from the second visual telephone.

14. A method of controlling a visual telephone system comprising two visual telephones according to claim 12 or 13, comprising the step of transmitting a communication mode connection acknowledge tone code signal from the first visual telephone via the telephone line.

15. A method according to claim 10 or 12 to 14, in which the mode change request is generated in the second visual telephone.

16. A method according to any of claims 10 to 15, in which the first visual telephone is the calling telephone and the second visual telephone is the called telephone.

17. A method according to any of claims 10 to 16 comprising the step of approving the communication mode to be established prior to switching between the communication modes in the first and/or the second visual telephone.

18. A visual telephone system as described herein with reference to and/or as illustrated to Figure 2 et seq. of the accompanying drawings.

19. A method of controlling a visual telephone system as described herein with reference to and as illustrated in Figs. 2 et. seq of the accompanying drawings.
